# EUROPÄISCHE PATENTSCHRIFT

(11) **EP 3 408 638 B1**
(45) Veröffentlichungstag und Bekanntmachung des Hinweises auf die Patenterteilung: **27.11.2019**
(21) Anmeldenummer: 17701702.7
(22) Anmeldetag: 27.01.2017
(51) Int. Cl.: G01M 15/04, G01M 17/007, G01M 13/02, G09B 9/042

(54) **VERFAHREN UND PRÜFSTAND ZUR DURCHFÜHRUNG EINES PRÜFLAUFS MIT EINEM PRÜFLING**
METHOD AND TEST OBJECT FOR CARRYING OUT A TEST RUN WITH A TEST OBJECT
PROCÉDÉ ET BANC DE TEST POUR RÉALISER UN CYCLE DE TEST AVEC UN ÉCHANTILLON DE TEST

(30) Priorität: 28.01.2016 AT 500462016
(43) Veröffentlichungstag der Anmeldung: 05.12.2018
(73) Patentinhaber: AVL List GmbH, 8020 Graz (AT)
(72) Erfinder: PFISTER, Felix, 8010 Graz (AT); GENEDER, Stefan, 85290 Geisenfeld (DE); JAKUBEK, Stefan, 1230 Wien (AT)
(74) Vertreter: Patentanwälte Pinter & Weiss OG
(86) Internationale Anmeldenummer: PCT/EP2017/051735
(87) Internationale Veröffentlichungsnummer: WO 2017/129728

(56) Entgegenhaltungen:
- DE-B3-102013 213 863
- US-A1- 2003 167 143
- US-A1- 2008 275 682
- US-A1- 2011 191 079

## Beschreibung

Die gegenständliche Erfindung betrifft ein Verfahren und einen Prüfstand zur Durchführung eines Prüflaufs auf einem Prüfstand, wobei ein Prüfling in Form des Fahrzeugs oder einer Komponente des Fahrzeugs real am Prüfstand aufgebaut und betrieben wird und eine Simulationseinheit mit einem Simulationsmodell den Prüflauf simuliert, wobei während des Prüflaufs am Prüfstand an einer Messstelle am Prüfling zumindest eine Temperatur als Messgröße gemessen wird, und zumindest eine Prüflingskomponente des Prüflings in eine Anzahl von Segmente unterteilt wird. Am Prüfstand ist zumindest ein Wärmestromaktuator vorgesehen, der dem Prüfling einen Wärmestrom einprägt.

Ein Test, Versuch oder ein Experiment ist eine Aktivität, die dazu dient festzustellen, ob eine (oder auch mehrere) technische Komponente(n) (mechanischer Aufbau, Hardware oder Software), verallgemeinernd Prüfling, innerhalb bestimmter Rahmenbedingungen funktioniert bzw. ob bestimmte Eigenschaften vorliegen. Der Prüfling ist damit das zu prüfende technische System. Der Prüfling kann dabei das Gesamtsystem (z.B. ein Fahrzeug) oder ein Teil des Gesamtsystems (z.B. ein Verbrennungsmotor, ein Antriebssystem, ein Abgassystem oder ein Abgasnachbehandlungssystem eines Fahrzeugs, etc.) darstellen.

Manche Tests dienen der Untersuchung von realen, häufig transienten, Vorgängen, denen der Prüfling unterworfen wird. Diese finden häufig in nachgebildeten, also simulierten Umgebungen statt. Für diese Aktivitäten kommen häufig auf den jeweiligen Prüfling abgestimmte Prüfstände, z.B. ein Motorprüfstand, ein Antriebsstrangprüfstand oder ein Rollenprüfstand, zum Einsatz. Diese Prüfstände ermöglichen es, dem Prüfling systematisch gewisse Umgebungsbedingungen aufzuprägen, also unter diesen Umgebungsbedingungen zu testen, und ermöglichen somit eine Wiederholbarkeit des Testvorgangs. Sie dienen aber auch der Validierung neuer oder unbekannter Vorgänge in Umgebungen, die für den Prüfling real nicht oder nur sehr zeit- und kostenaufwändig darstellbar wären. Da eine Testumgebung der realen Umgebung stets nur unvollständig entsprechen kann, sind die Ergebnisse des Tests stets auch unter Berücksichtigung der Qualität dieser Testumgebung, also des Prüfstandes und der simulierten Umgebung, zu bewerten.

Auf einem Prüfstand ist es zum Beispiel oftmals das Ziel, reale oder fiktive (d.h., virtuelle) Erprobungsfahrten von Kraftfahrzeugen nachzubilden. Diese Fahrten werden nachfolgend virtuelle Erprobungsfahrten genannt. Beispielsweise wird einem Verbrennungsmotor auf einem Motorprüfstand oder einem Antriebsstrang auf einem Antriebsstrangprüfstand über geeignete Schnittstellen die zeitlich veränderlichen Schnittstellengrößen (Schnittstelle zwischen real vorhandenem Prüfstand und der Simulation) aufgeprägt, die für diesen Prüfling als Teilkomponente eines Gesamtsystems Fahrzeug/Fahrer/Umwelt bei einer realen Erprobungsfahrt, z.B. eines realen Fahrzeugs über die Großglockner-Hochalpenstraße auftreten würden. Gleichfalls kann es aber interessant sein, dem Prüfling auf dem Prüfstand die zeitlich veränderlichen Schnittstellengrößen aufzuprägen, die im Falle einer beliebigen, auch fiktiven und in der Realität nicht zwingend darstellbaren Strecke, auftreten würden. Solche virtuelle Erprobungsfahrten können mit unterschiedlichsten Vorgehensweisen erzeugt werden, z.B. können sie durch reale Testfahrten vermessen werden oder sind zum Teil auch vordefiniert bzw. genormt (z.B. genormte Verbrauchszyklen). Sie können aber auch über virtuelle Umgebungen in Echtzeit, oder echtzeitnah (d.h. online), mit einer hinreichenden Güte errechnet werden (sogenannte X-In-The-Loop Erprobungsfahrt, wobei "X" für den Prüfling steht, also z.B. Verbrennungsmotor, Antriebsstrang, etc.). Am Prüfstand können dann während des Abfahrens der virtuellen Erprobungsfahrt verschiedene Messungen vorgenommen werden. Dazu wird der zu untersuchende Prüfling (Verbrennungsmotor, Antriebsstrang, Batterie, Fahrzeug, etc. oder Komponenten davon) an den Schnittstellen in der Regel von einer Belastungseinheit (Aktuator), wie z.B. einem Dynamometer (mechanischer Aktuator) oder einem Batterietester (elektrischer Aktuator), belastet, womit dem Prüfling die durch die virtuelle Erprobungsfahrt sich ergebende mechanische oder elektrische Belastung eingeprägt wird. Solche Erprobungsfahrten am Prüfstand erlauben es insbesondere, Entwicklungen oder Überprüfungen am Prüfling am Prüfstand durchzuführen, ohne das Gesamtsystem (z.B. ein reales Gesamtfahrzeug), in das der Prüfling als Teil eines Gesamtsystems normalerweise eingebunden ist, aufbauen zu müssen und ohne der Notwendigkeit den durchzuführenden Test erst mit diesem realen Fahrzeug durch eine reale Erprobungsfahrt durchzuführen. Solche Prüfstandversuche haben unter anderem den Vorteil einer weitgehenderen Reproduzierbarkeit und damit auch der besseren Vergleichbarkeit der Ergebnisse.

Ein Prüfstand kann aber systembedingt die Randbedingungen einer realen Erprobungsfahrt niemals absolut exakt, sondern stets nur mit Einschränkungen nachbilden. Es ist aber auch nicht in allen Fällen erwünscht oder erforderlich, den Prüfling diesen exakten Randbedingungen zu unterwerfen. In manchen Fällen möchte man den Prüfling nur erdachten, hypothetischen Randbedingungen unterwerfen. Aktuell erfolgt gemäß Stand der Technik z.B. an Leistungsprüfständen im Wesentlichen eine Fokussierung auf eine hohe Übereinstimmung der mechanischen und elektrischen Leistungsflüsse zwischen der virtuellen und der realen Erprobungsfahrt. Dabei kommt es trotz guter Übereinstimmung des zeitlichen Verlaufs gewisser am Prüfstand gemessener Messgrößen häufig zu beachtlichen Differenzen des zeitlichen Verlaufes gewisser anderer Messgrößen. Beispielsweise wurde festgestellt, dass trotz einer hohen Übereinstimmungsgüte der mechanischen Leistungsflüsse (wie z.B. der Drehzahl und der Drehmomente) und trotz gleicher Emissions-Messtechnik bei der virtuellen Erprobungsfahrt am Antriebsstrangprüfstand und am Rollenprüfstand im Vergleich mit der realen Erprobungsfahrt mit einem realen Fahrzeug eine Emissionsmessung (CO, NOx, ...), insbesondere im Teillastbereich, nicht die gleichen Ergebnisse liefert. Der Grund dafür liegt oftmals in den unterschiedlichen thermischen und thermodynamischen Randbedingungen, d.h. insbesondere in den unterschiedlichen Temperatur- und Wärmestromdichtefeldern an neuralgischen Komponenten des Fahrzeugs. Diese sind unter anderem auf unterschiedliche Medienflüsse (z.B. Luft, Wasser, Öl), die dem Prüfling eingeprägt werden, zurückzuführen.

In einem realen Fahrzeug sind Komponenten bzw. Bauteile verbaut, die unterschiedlichen thermischen Belastungen ausgesetzt sein können. Ein Beispiel hierfür liefert der Verbrennungsmotor mit einem Turbolader und dem Abgasstrang. Im Abgasstrang können auch Komponenten wie Katalysator oder Partikelfilter angeordnet sein. Über die Oberflächen der genannten Komponenten und Teilkomponenten erfolgt in beiden Fällen (reale oder virtuelle Erprobungsfahrt) ein thermischer Energiefluss. Ein weiteres Beispiel liefert der elektrische Energiespeicher eines Hybridfahrzeugs. Auch diese Komponente interagiert thermisch mit der Umgebung/Umwelt und wird ihrerseits durch Umgebungs-/Umwelteinflüsse ("Randbedingungen") beeinflusst. So wird sich beispielsweise der Motorblock oder der Abgasstrang eines Fahrzeugs je nach Rand- bzw. Umgebungsbedingungen thermisch unterschiedlich mit seiner Umgebung austauschen. Es ergeben sich somit unterschiedliche transiente Komponenten-Temperaturfelder und Wärmestromdichten (thermische Energieströme) in der Komponente und an der Komponentenoberfläche. So gibt z.B. ein Verbrennungsmotor bei winterlichen Umgebungsbedingungen eine größere Wärmemenge ab (kalte Fahrbahn, kalte Umgebungsluft), als bei sommerlichen Umgebungsbedingungen (heiße Fahrbahn, heiße Umgebungsluft). Die Wärmeübertragung (Wärmestromdichten) zwischen einem Prüfling und der Umgebung findet dabei aufgrund der physikalischen Mechanismen Wärmeleitung, Wärmeströmung (Konvektion) und Wärmestrahlung statt.

Bei einer realen Erprobungsfahrt mit einem realen Fahrzeug auf einer realen Strecke wirken Wärmeübertragungsvorgänge auf die Oberflächen des Prüflings bzw. eines Prüflingsteils. Es herrschen verschiedene Umwelt- bzw. Umgebungsbedingungen, charakterisiert etwa durch Luftdruck, Luftfeuchtigkeit oder Lufttemperatur, es kommt zu Effekten wie Spritzwasser auf den Prüfling, usw. Am Prüfstand herrschen in der Regel aber andere Umweltbedingungen, was einen der Gründe darstellt, warum die Ergebnisse einer virtuellen Erprobungsfahrt am Prüfstand von den Ergebnissen einer realen Erprobungsfahrt abweichen. Das Aufprägen (Simulation bzw. Emulation) von - innerhalb gegebener Randbedingungen beliebigen - Wärmeübertragungsvorgängen am Prüfstand hat bislang noch kaum bzw. unzureichend Beachtung gefunden.

Die am Prüfstand beispielsweise oftmals verwendeten Kühlluftgebläse zur Erzeugung einer Luftströmung über den Prüfling, sowie die Prüfstandskonditionierung (beispielsweise das Temperieren des Prüfstandsraumes) sind in der Regel nicht ausreichend, um die realen Umweltbedingungen am Prüfstand ausreichend genau nachzubilden. Die Kühlluftgebläse werden hauptsächlich dazu verwendet, die Auswirkungen auf die Motorkühlung im Hinblick auf die Fahrwindgeschwindigkeit abzubilden. Diese Kühlluftgebläse sind deshalb häufig unzureichend dimensioniert, bzw. bieten sie nicht die erforderlichen Freiheitsgrade. Beispielsweise wird die Drehzahl des Kühlluftgebläses häufig lediglich in Abhängigkeit von der Fahrgeschwindigkeit gesteuert. Durch eine Klimatisierung des Prüfraumes können die Lufttemperatur und Luftfeuchte in der Umgebung des Prüfstandes geregelt werden.

Des Weiteren sind am Prüfstand auch Konditioniereinrichtungen für die Medien Ansaugluft, Kühlmittel, Öl und Ladeluft bekannt. Diese kommen meist an Komponentenprüfständen (Motor-, Antriebs-, Batterieprüfstand) zum Einsatz. Mit Hilfe dieser wird die jeweilige Medientemperatur beeinflusst bzw. geregelt. Die Konditioniereinrichtung für die Ansaugluft kann weiterhin die Luftfeuchte sowie den Druck beeinflussen.

Sowohl ein Kühlluftgebläse, die Prüfraumklimatisierung als auch die Medienkonditionierung bekommen dabei die Sollwertvorgaben z.B. für Temperatur, Feuchte und Druck von der Prüfstandsautomatisierung. Dabei erfolgt lediglich eine Vorgabe in Form eines zeitlichen Verlaufs der jeweiligen Größe (z.B. Temperatur), eine Interaktion (im Sinne einer X-in-the-Loop-Simulation) in Form einer Rückwirkung mit einer virtuellen Umgebung des Prüflings, wobei es sich auch um eine antizipierte, zukünftige Umgebung handeln kann, erfolgt dabei nicht. Des Weiteren ergibt sich das Problem der Sollwertfindung, d.h. der Ermittlung eines Vorgabewerts, der ein realitätsnahes Abbilden der virtuellen Umgebungsbedingungen des Prüflings ermöglicht.

Es sind weiters Prüfstandsaufbauten bekannt, bei denen Prüflingsteile (wie z.B. ein Motor auf einem Motorprüfstand) thermisch gekapselt werden, um die thermischen Randbedingungen besser nachbilden zu können. Ein solcher Aufbau kann z.B. Krämer S., et al., "Verlagerung von Rollentests auf den Motorenprüfstand", MTZ-Motortechnische Zeitschrift, 2015, 76 (3), S. 36-41 entnommen werden. Dabei wird an einem Motorprüfstand die Fahrzeugkarosserie nachgebildet, indem der Motor in einer abgeschlossenen Motorkapselung und der Abgasstrang in einer abgeschlossenen Unterbodenkapselung angeordnet werden, um die thermischen Randbedingungen im Motorraum bzw. den Unterboden nachzubilden. Dabei erfolgt jeweils eine Einhausung in ein isoliertes Gehäuse (Motorkapselung, Unterbodenkapselung), die mit Lüftern ausgestattet sind. Mittels der Lüfter wird die Temperatur in der Motorkapselung und der Unterbodenkapselung gesteuert. Bei der vorgestellten Lösung lassen sich damit die Ergebnisse zwischen Emissionsmessungen am Motorprüfstand und am Rollenprüfstand vergleichen. Für eine realitätsnahe Abbildung der Umgebungsbedingungen ist dies jedoch unzureichend, da zum einen in der Motorkapselung und der Unterbodenkapselung eine globale Temperatur eingestellt wird und zum anderen auch hierbei das Problem der richtigen Sollwertvorgabe besteht. Folglich haben verschiedene Komponenten des Prüflings, wie z.B. der Motorblock, der Turbolader, der Kühler, der Abgasstrang, usw. bzw. Teile davon, an deren Oberflächen Temperaturverteilungen, die nicht mit der realen, oder den erwünschten, Temperaturverteilungen übereinstimmen. Die Temperaturen dieser Komponenten beeinflussen aber maßgeblich nicht nur die Wärmeübertragungsvorgänge in Form der thermischen Energieflüsse ("Wärmeströme"), sondern z.B. auch das Emissionsverhalten des Motors (z.B. NOx, CO, usw.), womit es zu den unerwünschten Unterschieden zwischen realer und virtueller Erprobungsfahrt kommt. Das dargestellte Verfahren löst damit nicht das Problem der Nachbildung bzw. der Antizipation des thermischen Verhaltens des Prüflings während einer realen Erprobungsfahrt.

Aus dem Patent DE 10 2013 213 863 B3 ist daher schon ein Kühlsystem für ein Bauteil, wie einen Verbrennungsmotor, bekannt geworden, mit dem Temperaturen am Bauteil eingestellt werden können, indem das Bauteil mit einer Gebläsematrix, bestehend aus einer Vielzahl einzelner Gebläse, angeblasen wird. Das Kühlsystem ermöglicht es dabei, an einem Bauteil unterschiedliche Temperaturzonen (-felder) einzustellen. Es wird eine Zieltemperatur für einzelne Punkte als von vornherein (also bereits bei Beginn des Prüflaufes) bekannter Sollwert, in Form eines zeitlichen Verlaufs, vorgegeben, die von einer Regeleinheit über die Gebläsematrix eingeregelt wird, um z.B. die thermische Festigkeit des Bauteils oder Teilen davon zu überprüfen. Das ist gegenüber herkömmlichen Prüfstandsaufbauten eine Verbesserung vor allem hinsichtlich der thermischen Randbedingungen für einen Prüfstandsversuch und möglicherweise häufig ausreichend. Die Bauteiltemperatur als Zielgröße der Regelung am Prüfstand lässt jedoch die Wärmeübertragungsvorgänge in Form der thermischen Energieflüsse des realen Prüflings in den verschiedenen Testumgebungen außer Acht. Effekte wie Konvektion, Wärmestrahlung, etc., die an den Komponenten des Prüflings (reales Fahrzeug) eine wichtige Rolle spielen, werden dabei am Prüfstand nicht berücksichtigt. Die Vorgabe des Temperaturfeldes der Oberfläche des Prüflings, bzw. des Prüflings selbst, wie in der DE 10 2013 213 863 B3 beschrieben, lässt die Wärmeübertragungsvorgänge außer Acht und ist daher häufig nicht ausreichend für realitätsnahe Prüfstandversuche in Form virtueller Erprobungsfahrten auf einem Prüfstand.

Dem Patent DE 10 2013 213 863 B3 liegt damit die sehr einschränkende Annahme zugrunde, dass die Zieltemperaturen an den ausgesuchten Messstellen als Funktion der Zeit bekannt seien (d.h. vorab als Führungsgrößen der Regelung vorgegeben werden können). Diese müssen vorab definiert werden, wobei mit einer derartigen willkürlichen Festlegung aber keine realitätsnahen Umweltbedingungen erzeugt werden können, oder sie müssten in einer realen Erprobungsfahrt vorab ermittelt werden, was wiederum sehr aufwändig ist. Das Problem der Sollwertermittlung wird im Patent DE 10 2013 213 863 B3 nicht betrachtet.

In der US 2003/0167143 A1 wird ein Getriebe auf einem Prüfstand einem Prüflauf unterworfen, wobei auch die Umgebung des Getriebes im Sinne einer Umgebungstemperatur nachgebildet wird. Dazu ist eine Getriebekühlersimulation vorgesehen, die die Getriebekühlung durch das Getriebeöl nachbildet. Für die Temperierung des Getriebeöls ist ein Regler vorgesehen über hat. Die Umgebungstemperatur des Getriebes wird durch einen Umgebungsregler geregelt, wobei für die Nachbildung der Umgebung des Getriebes am Prüfstand Luft auf das Getriebe geblasen wird. Die Sollwerte für die Regleung der Temperierung des Getriebeöls und für die Einstellung der Umgebungstemperatur werden vorgegeben, wobei nicht erläutert wird, woher diese Sollwerte stammen oder wie diese ermittelt werden.

Es ist daher eine Aufgabe der Erfindung, ein Verfahren zur Durchführung eines Prüflaufs, z.B. in Form einer thermischen X-In-The-Loop Erprobungsfahrt, eines Prüflings auf einem Prüfstand, und einen zugehörigen Prüfstand, anzugeben, die es erlauben, dem Prüfling während des Prüflaufs reale Umwelt- bzw. Umgebungsbedingungen, bzw. Bedingungen, wie sie sich aus den Gesetzen der Wärmeübertragung einer virtuellen Umgebung ergeben, aufzuprägen.

Diese Aufgabe wird durch das eingangs erwähnte Verfahren, und in gleicher Weise durch den eingangs genannten Prüfstand, erfindungsgemäß dadurch gelöst, dass während des Prüflaufs die thermische Interaktion zumindest eines Segmentes mit der Umgebung des Fahrzeugs durch ein thermisches Simulationsmodell des Simulationsmodells nachgebildet wird, indem das thermische Simulationsmodell dem zumindest einem Segment zu- oder abgeführten Segment-Wärmestrom berechnet und dass dieser Segment-Wärmestrom am Prüfstand an dem zumindest einen Segment mittels einer Anzahl von Wärmestromaktuatoren, die dem Prüfling einen Wärmestrom einprägen, in Abhängigkeit von der gemessen Temperatur eingeregelt wird.

Dank der Erfindung ist es also möglich, dem Prüfling während eines Prüflaufs gewisse thermische Umgebungsbedingungen aufzuprägen und damit am Prüfstand der Realität nahe kommende Verhältnisse zu schaffen. Diese thermischen Umgebungsbedingungen interagieren mit dem Prüfling in Form von Wärmeübertragungsvorgängen und können realitätsnah sein (d.h., in der späteren Realität des Prüflings als Teil eines real im Einsatz stehenden Fahrzeugs tatsächlich vorkommen - Beispiel: Fahrzeug fährt durch das Death Valley) oder können auch nur fiktiv sein (d.h., erdacht, aber trotzdem realen, physikalischen Bedingungen entsprechend - Beispiel: Fahrzeug fährt durch das Death Valley bei einer Außentemperatur von 60°C) . Häufig wird der Prüfling während des Prüflaufs am Prüfstand zusätzlich zur thermischen Belastung gleichzeitig auch mechanisch, elektrisch und/oder auch über Massen- und Informationsströme (z.B. CAN-Kommunikation) belastet.

Durch das thermische Simulationsmodell kann die thermische Interaktion des Prüflings bzw. des zu konditionierenden Segmentes des Prüflings mit der simulierten Umgebung innerhalb gewisser technischer Grenzen beliebig nachgebildet werden. Dabei können räumlich und zeitlich veränderliche Wärmeübertragungsvorgänge des Prüflings nachgebildet werden, die realen Verhältnissen entsprechen. Mittels der Wärmestromaktuatoren können diese Wärmeübertragungsvorgänge dann am Prüfstand am Prüfling eingeregelt werden, womit der Prüfling am Prüfstand im Wesentlichen denselben, bzw. den hinreichend ähnlichen, thermischen Bedingungen unterworfen wird, wie als Teilkomponente eines Gesamtsystems (z.B. eines Fahrzeug) während einer Erprobungsfahrt unter realen oder fiktiven, aber trotzdem physikalisch der Realität entsprechenden Bedingungen (Beispiel: Fahrt von den thermischen Bedingungen des Death-Valley zu den thermischen Bedingen am Südpol innerhalb von zwei Stunden).

Vorzugsweise kann die Simulationsqualität erhöht werden, wenn das Simulationsmodell zusätzlich eines oder mehrere der folgenden Modelle aufweist: Fahrzeugmodell, Fahrermodell, Straßen- oder Streckenmodell, Radmodell, Umgebungsmodell. Darüber hinaus kann mit zusätzlichen Teilmodellen auch die Flexibilität erhöht werden, da damit in den Prüfläufen verschiedenste Einflüsse berücksichtigt werden können.

Vorteilhafterweise wird zusätzlich zumindest eine weitere Messgröße des Prüflings erfasst wird und im Simulationsmodell verarbeitet. Ebenso vorteilhaft ist es, wenn zusätzlich zumindest eine weitere Messgröße der Prüflingsumgebung des Prüflings erfasst wird und im Simulationsmodell verarbeitet wird.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 einen Rollenprüfstand für ein Fahrzeug nach dem Stand der Technik,
Fig.2 einen erfindungsgemäßen Rollenprüfstand,
Fig.3 einen erfindungsgemäßen Motorprüfstand,
Fig.4 das erfindungsgemäße Einregeln der Wärmeströme an Segmenten eines Prüflings,
Fig.5 eine Ausführung einer Simulationseinheit und
Fig.6 den Informationsfluss bei der Umsetzung des erfindungsgemäßen Verfahrens zum Betreiben eines Prüfstandes.

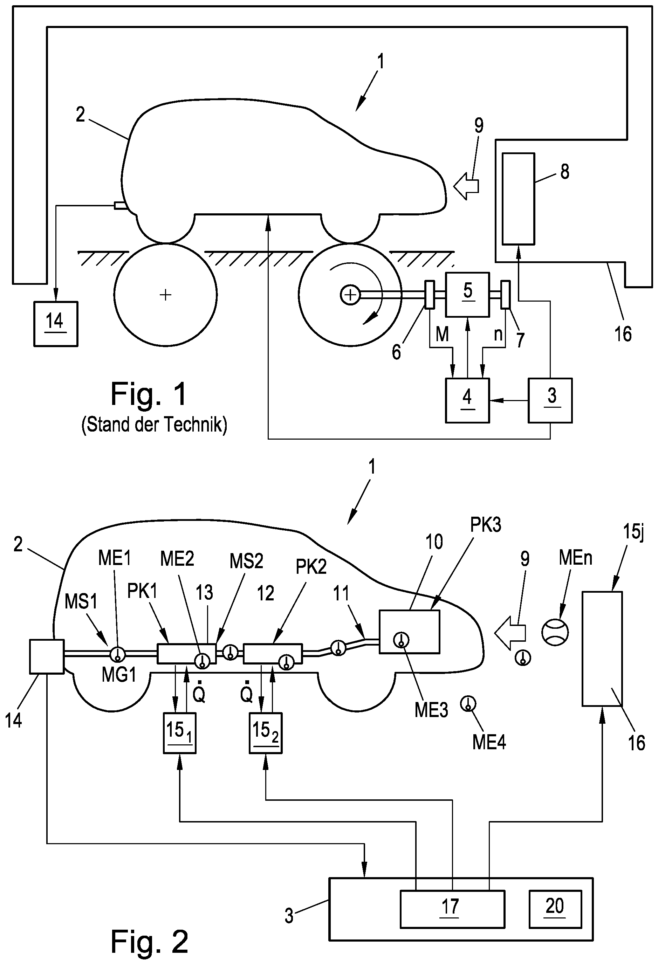

Mit Fig.1 wird ein herkömmlicher Prüfstand 1 für einen Prüfling 2 dargestellt. Der Prüfling 2 ist im gezeigten Ausführungsbeispiel ein Fahrzeug und der Prüfstand 1 ein Rollenprüfstand. Selbstverständlich könnte der Prüfling 2 aber auch eine beliebiges Teilsystem des Fahrzeugs, wie z.B. ein Antriebsstrang, ein Verbrennungsmotor, eine Antriebsbatterie (Powerpack), ein Turbolader, ein Katalysator, usw., sein, und der Prüfstand 1 ein dazu passender Prüfstand, wie z.B. ein Antriebsstrangprüfstand, ein Motorprüfstand, ein Powerpackprüfstand, ein Turboladerprüfstand, ein Katalysatorprüfstand, usw.

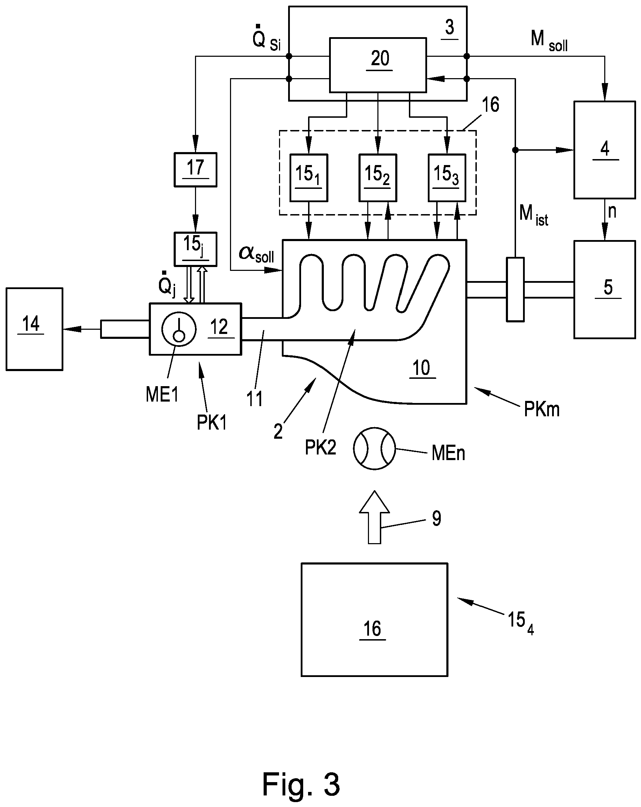

Am Prüfstand 1 ist eine Prüfstandautomatisierung in Form einer Prüfstandautomatisierungseinheit 3 vorgesehen, die die am Prüfstand durchzuführende virtuelle Erprobungsfahrt (=Prüflauf) steuert und dazu alle benötigten Einrichtungen (also insbesondere die Aktuatorik) des Prüfstandes 1 gemäß den Vorgaben des Prüflaufs ansteuert. Die Prüfstandautomatisierungseinheit 3 kann dabei insbesondere auch den Prüfling 2 ansteuern. Im Falle eines Fahrzeugs als Prüfling 2 könnten im Fahrzeug beispielsweise bekannte Fahrroboter angeordnet sein, die die Steuerbefehle der Prüfstandautomatisierungseinheit 3, wie Gangschalten, Gas geben, etc., umsetzen. Alternativ oder zusätzlich könnte die Prüfstandautomatisierungseinheit 3 den Prüfling 2 auch über eine Prüflingssteuereinheit, wie beispielsweise eine Fahrzeugsteuereinheit (ECU), eine Getriebesteuereinheit (TCU), eine Hybridsteuereinheit, ein Batteriemanagementsystem, etc., direkt ansteuern. Im Falle eines Verbrennungsmotors als Prüfling 2 könnte die Prüfstandautomatisierungseinheit 3 beispielsweise die Drosselklappenstellung α (siehe Fig.3) oder die Treibstoffeinspritzung ansteuern.

Der Prüfling 2 wird durch eine Belastungsmaschine (allgemein Aktuator) 5, im vorliegenden Fall mechanisch (mechanischer Leistungsfluss zwischen Prüfling und Umgebung), belastet. Im Falle eines Rollenprüfstandes ist die (mechanische) Belastungsmaschine 5 der Antrieb bzw. Abtrieb der Prüfstandrollen, wie in Fig.1 angedeutet. Im Falle eines Verbrennungsmotors oder Antriebsstranges als Prüfling 2 wäre die mechanische Belastungsmaschine 5 z.B. ein Dynamometer bzw. ein elektrischer Dynamometer, der mit dem Verbrennungsmotor bzw. dem Antriebsstrang verbunden ist. Im Falle einer Batterie als Prüfling 2 wäre die Belastungsmaschine 5 elektrisch, z.B. in Form eines elektrischen Batterietesters. Geeignete Belastungsmaschinen für verschiedene Prüflinge 2 sind hinlänglich bekannt, weshalb hier nicht näher darauf eingegangen wird.

Die Belastungsmaschine 5 wird meistens von einem Aktuatorregler 4, der wiederum von der Prüfstandautomatisierungseinheit 3 Sollwerte empfängt, geregelt, um am Prüfling 2 beispielsweise gewisse, häufig transiente, Belastungsmomente M oder gewisse, häufig transiente, Drehzahlen n einzuregeln. Dazu sind am Prüfstand 1 in der Regel auch eine Momentenmesseinrichtung 6 und/oder eine Drehzahlmesseinrichtung 7 vorgesehen, die entsprechende Istwerte des Belastungsmoments M und der Drehzahl n des Prüflings 2 messen und der Prüfstandautomatisierungseinheit 3 zur Verfügung stellen. Selbstverständlich können für andere Prüflinge 2 bzw. Prüfstandtypen auch andere oder zusätzliche Messgrößen, wie beispielsweise ein elektrischer Strom oder eine elektrische Spannung, gemessen und der Prüfstandautomatisierungseinheit 3 zugeführt werden.

Während des Prüflaufs am Prüfstand 1 wird des Weiteren beispielsweise mit einem Abgasmesssystem 14 eine Emissionsmessung durchgeführt. Selbstverständlich könnten je nach Prüfling 2 auch andere oder zusätzliche, insbesondere für die Entwicklung des Prüflings benötigte, Messungen durchgeführt werden, wie beispielsweise eine Verbrauchsmessung, Messung des elektrischen Energieflusses, usw. Es ist das grundlegende Ziel eines Prüflaufs zumindest eine Ausgangsgröße des Prüflings 2, also z.B. eine Emission, ein Verbrauch, eine Leistung, etc., zu erfassen und auszuwerten, um daraus Erkenntnisse für die Entwicklung des Prüflings 2 zu gewinnen. Dabei ist es wünschenswert, wenn sich der Prüfling 2 am Prüfstand 1 im Wesentlichen genauso verhält, wie eingebettet in einem realen Fahrzeug.

Am Prüfstand 1 ist häufig auch zumindest eine Konditioniereinheit 16 zur Konditionierung der Prüflingsumgebung des Prüflings 2 und/oder des Prüflings 2 vorgesehen. Insbesondere kann damit dem Prüfling 2 eine gewisse (z.B. eine erwünschte) räumlich und zeitlich veränderliche Wärmeübertragung eingeprägt werden, welche der Prüfling 2 am Prüfstand 1 mit seiner Prüflingsumgebung austauscht. Die Wärmeübertragung kann dabei an eine gewisse Stoffübertragung gekoppelt sein, z.B. eine Wärmeübertragung mit einem Luftstrom oder einem anderen Stoffstrom. Die Wärmeübertragung umfasst damit auch solche Stoffübertragungen als Äquivalente zu einer Wärmeübertragung. Oftmals ist als Konditioniereinheit 16 eine Prüfstandklimatisierung zur Einstellung der Umgebungstemperatur, Luftfeuchtigkeit, usw. der Prüflingsumgebung vorgesehen. Ferner kann die Konditioniereinheit 16 auch ein Gebläse 8 zur Simulierung beispielsweise eines Fahrtwindes umfassen. Das Gebläse 8 kann aber auch getrennt von der Konditioniereinheit 16 als separate Einrichtung am Prüfstand 1 realisiert sein. Ein solches Gebläse 8 liefert einen Beitrag, dem Prüfling 2 einen gewissen (z.B. eine erwünschte) im Allgemeinen räumlich und zeitlich veränderlichen Wärmeübertragungsvorgang einzuprägen, den der Prüfling 2 mit der Prüflingsumgebung austauscht. Auch hier ist es selbstverständlich, dass für verschiedene Prüfstandtypen häufig verschiedene Konditioniereinheiten 16 zum Einsatz kommen können. Im dargestellten Ausführungsbeispiel umfasst die Konditioniereinheit 16 ein Gebläse 8, das dem Prüfling 2 ein bestimmtes Luftströmungsfeld 9 aufprägt.

Zusätzlich kann die Konditioniereinheit 16 am Prüfstand 1 zur Konditionierung des Prüflings 2 bekannter Weise auch eine Medienkonditioniereinheit umfassen, beispielsweise eine Ansaugluftkonditionierung, eine Ladeluftkonditionierung, eine Ölkonditionierung oder eine Kühlwasserkonditionierung, die aus Gründen der Übersichtlichkeit in Fig.1 nicht dargestellt sind. Auch diese Aktuatoren liefern einen Beitrag, dem Prüfling 2 gewisse, häufig erwünschte, zeitlich und räumlich veränderliche Wärmeübertragungsvorgänge aufzuprägen.

Auch die Konditioniereinheit 16, gegebenenfalls mit Gebläse 8 und/oder mit Medienkonditioniereinheit, erhalten in der Regel von der Prüfstandautomatisierungseinheit 3 gewisse Sollwerte (Temperaturen, Luftfeuchten, Massenströme, ...), die von der Konditioniereinheit 16, bzw. dem Gebläse 8 oder der Medienkonditioniereinheit, eingeregelt werden. Wie eingangs ausgeführt, können mit einer solchen Konditioniereinheit 16, mit einem Gebläse 8 und/oder mit klassischen Medienkonditioniereinheiten, die erwünschten (z.B. realitätsnahen) Wärmeübertragungsvorgänge am Prüfling 2 oder an Prüflingskomponenten nicht oder - im Hinblick auf die durchzuführende Testaufgabe - nur unzureichend nachgebildet werden.

Um Prüfläufe am Prüfstand 1 in einer Art und Weise durchführen zu können, sodass die thermischen Bedingungen des Prüflings 2 während des Prüflaufs vorgegebenen oder erwünschten, insbesondere auch die Realität nachbildenden (im Sinne eines "Nachfahren" einer realen Erprobungsfahrt am Prüfstand), Bedingungen entsprechen, ist daher erfindungsgemäß vorgesehen, die thermischen Bedingungen des Prüflings 2 entsprechend diesen Vorgaben nachzubilden. Das wird nachfolgend anhand der Fig.2 am Beispiel eines Rollenprüfstandes als Prüfstand 1 und eines Fahrzeugs als Prüfling 2 und anhand der Fig.3 am Beispiel eines Motorprüfstandes als Prüfstand 1 und eines Verbrennungsmotors als Prüfling 2 erläutert. Dabei sind aus Gründen der Übersichtlichkeit nicht mehr alle Bestandteile des Prüfstands 1 wie zu Fig.1 beschrieben dargestellt.

Der Prüfling 2 umfasst eine Vielzahl von Prüflingskomponenten PKi, i=1,...,m, wobei eine Prüflingskomponente PKi eine ganze Baugruppe des Prüflings 2 sein kann, wie beispielsweise ein Verbrennungsmotor 10, ein Abgasstrang 11, oder Abgasnachbehandlungseinheiten 12, 13, wie ein Katalysator oder ein Partikelfilter im Abgasstrang 11. Eine Prüflingskomponente PKi kann aber auch ein Bauteil des Prüflings 2 oder Teil einer Baugruppe des Prüflings 2 sein, beispielsweise ein Abgasrohrabschnitt des Abgasstranges 11. Es kann aber auch der ganze Prüfling 2 eine Prüflingskomponente PKi (i=1) sein, beispielsweise wenn der Prüfling 2 ein elektrischer Akkumulator ist. Erfindungsgemäß ist zumindest eine solche Prüflingskomponente PKi vorhanden. Eine Prüflingskomponente PKi ist im Sinne der Erfindung insbesondere ein Teil des Prüflings 2 an dem eine räumlich und zeitlich veränderliche thermische Interaktion (Wärmeübertragung, Wärmestromdichten) eingeprägt werden soll, die der Prüfling 2 mit seiner Prüflingsumgebung austauscht, wie nachfolgend beschrieben wird. Damit eigenen sich als Prüflingskomponenten PKi insbesondere solche Teile des Prüflings 2, deren Verhalten oder deren Eigenschaften von einer thermischen Belastung abhängig sind. Damit kann Einfluss auf gewisse Eigenschaften des Prüflings 2 genommen werden. Beispielsweise ist die Eigenschaft "NOx-Emissionen" unter anderen von der thermischen Belastung der Prüflingskomponente "Katalysator" abhängig.

An einer Anzahl n Messstellen MSi, i = 1, ...,n, wobei erfindungsgemäß zumindest eine Messstelle MS1 notwendig ist, ist jeweils eine Messeinheit MEi, i = 1, ...,n angeordnet, mit der jeweils eine Messgröße MGi, i = 1, ...,n des Prüflings 2 gemessen wird. An einer Messstelle MSi können auch verschiedene Messeinheiten MEi zur Messung verschiedener Messgrößen MGi vorgesehen sein. Dabei ist zumindest eine Messgröße MGi eine Temperatur, oder eine Messgröße, aus der eine Temperatur berechnet oder geschätzt werden kann. Demgemäß ist zumindest eine Messeinheit MEi beispielsweise ein einfacher Temperatursensor, mit dem eine Temperatur des Prüflings 2 an der Messstelle MSi gemessen wird. Eine Messeinheit MEi zur Erfassung einer Temperatur kann beispielsweise eine Medientemperatur, wie eine Abgastemperatur oder eine Fluidtemperatur, eine Baugruppen- bzw. Bauteiltemperatur oder eine Oberflächentemperatur erfassen. Grundsätzlich können mit Wärmebildkameras als Messeinheit MEi, oder mit anderen Verfahren, auch komplexe dreidimensionale Temperaturfelder des Prüflings 2, einer Prüflingskomponente PKi, oder eines Teils davon vermessen werden.

Durch geeignete mathematische/physikalische Verfahren kann auch aus einigen Temperaturmessungen am Prüfling 2 auf das gesamte Temperaturfeld (also die räumliche Temperaturverteilung) des Prüflings 2 oder einer Prüflingskomponente PKi oder Teilen hiervon (z.B. der Oberfläche der Prüflingskomponente PKi) geschlossen werden. Ein solches Verfahren könnte sich etwa der bekannten Interpolation durch Splinefunktionen oder der Methode der finiten Elemente bedienen, um Temperaturen bzw. räumliche Temperaturverläufe zwischen den Messstellen MSi zu schätzen.

Am Prüfling 2 können mit Messeinheiten MEi zusätzlich auch ein Mediendurchfluss, wie ein Abgasdurchfluss durch den Abgasstrang 11 oder ein Ansaugluftdurchfluss, gemessen werden. Es könnten auch Mediendrücke, wie Abgasdrücke, an verschiedenen Stellen gemessen werden.

Ebenso kann mit einer Messeinheit MEi am Prüfstand 1 zusätzlich eine Messgröße MGi der Prüflingsumgebung des Prüflings 2, vorzugsweise im Nahbereich des Prüflings 2, gemessen werden. Eine Messgröße MGi der Prüflingsumgebung kann beispielsweise der Luftdruck, eine Umgebungstemperatur, eine Luftfeuchtigkeit, usw. sein. Aus Gründen der Übersichtlichkeit sind in den Fig.2 und 3 nicht alle Messstellen MSi, Messeinheiten MEi und Messgrößen MGi bezeichnet.

Um an einer Prüflingskomponente PKi am Prüfstand 1 Wärmeübertragungsvorgänge in gewünschter oder vorgebebener Weise nachzubilden, ist zumindest ein Wärmestromaktuator 15ⱼ, j=1,...,k vorgesehen. Mit dem zumindest einen Wärmestromaktuator 15ⱼ werden an einer Prüflingskomponente PKi die erwünschten Wärmeübertragungsvorgänge eingeprägt, insbesondere in Form von Wärmeströmen Q̇(t), bzw. von Wärmestromdichten q̇(t,x), die bevorzugt räumlich (x) und zeitlich (t) veränderlich sind. In weiterer Folge wird der Einfachheit halber nur mehr Q und q verwendet. Der Wärmestrom Q̇ ist dabei das Integral der Wärmestromdichte q̇, und die beiden Größen können in äquivalenter Weise verwendet werden.

In weiterer Folge wird daher nur mehr der Begriff Wärmestrom Q̇ verwendet, wobei darunter auch in äquivalenter Weise eine Wärmestromdichte q̇, oder irgendeine andere, zu einem Wärmestrom Q äquivalente Größe verstanden wird.

Ein Wärmestromaktuator 15ⱼ kann eine Wärmesenke, eine Wärmequelle oder beides darstellen. Als Wärmestromaktuator 15ⱼ kommen verschiedenste Einrichtungen in Frage, die Wärme (egal in welche Richtung) übertragen bzw. insbesondere den Prüflingskomponenten PKi Wärmeströme Q einprägen können. Denkbar sind beispielsweise Wasser- oder Luft-Wärmetauscher, Fluid-Anströmer (z.B. Gebläse, Venturianströmer), Peltierelemente, Sprühdüsen zum Besprühen mit Flüssigkeiten wie Wasser, usw. Daher ist aber auch eine herkömmliche Konditioniereinheit 16 zur Prüfstandraumkonditionierung grundsätzlich als Wärmestromaktuator 15ⱼ verwendbar, wie in Fig.2 und 3 angedeutet. In gleicher Weise kann auch ein Gebläse 8 des Prüfstandes 1 oder eine Medienkonditioniereinheit der Konditioniereinheit 16, beispielsweise eine Ansaugluftkonditionierung, eine Ladeluftkonditionierung, eine Ölkonditionierung oder eine Kühlwasserkonditionierung eines Verbrennungsmotors 10, als Wärmestromaktuator 15ⱼ genutzt werden, wie in Fig.3 mit den Wärmestromaktuatoren 15₁, 15₂ und 15₃ angedeutet. Eine solche Medienkonditioniereinheit ist typischerweise als Wärmetauscher für das jeweilige Medium ausgeführt. Damit wird also dem Prüfling 2, bzw. einer Prüflingskomponente PKi, mittels eines Wärmestromaktuators 15ⱼ über den Wärmestrom Q eine gewisse, vorzugsweise eine vorgegebene, räumlich und zeitlich veränderliche Wärmeübertragung eingeprägt, welche der Prüfling 2 mit seiner Prüflingsumgebung austauscht.

Die genaue Ausführung der Wärmestromaktuatoren 15ⱼ ist für die Erfindung aber nebensächlich. Einzige notwendige Anforderung an den Wärmestromaktuator 15ⱼ ist es, einen Wärmestrom Q zu einer Prüflingskomponente PKi des Prüfling 2 hin und/oder einen Wärmestrom Q von einer Prüflingskomponente PKi des Prüfling 2 weg, oder beides, einprägen zu können. Jeder Wärmestromaktuator 15ⱼ kann dem Prüfling 2 daher Wärme zuführen und/oder abführen.

Mit den Messeinheiten MEi kann auch eine Messgröße eines Wärmestromaktuators 15ⱼ erfasst werden, wie beispielsweise eine Lüfterdrehzahl oder eine Anströmgeschwindigkeit der Luft, wenn der Wärmestromaktuator 15ⱼ ein Gebläse 8 ist (wie in Fig.2 mit der Messeinheit MEn), oder ein Fluidstrom eines Wärmetauscherfluids (Luft, Wasser, usw.), wenn der Wärmestromaktuator 15ⱼ ein Wärmetauscher ist.

Die Ansteuerung der Wärmestromaktuatoren 15ⱼ zum Einstellen eines gewünschten Wärmestromes Q übernimmt zumindest ein Wärmestromregler 17. Die Implementierung der Wärmestromregler 17 kann als separate Einheit am Prüfstand 1 (wie in Fig.3), und/oder integriert in den Wärmestromaktuator 15ⱼ, und/oder als Teil der Prüfstandautomatisierungseinheit 3 (wie in Fig.2) erfolgen.

Die Regelung der Wärmestromaktuatoren 15ⱼ mittels Wärmestromregler(n) 17 ist demgemäß eine Mehrgrößenregelung, welche zumindest eine Messgrößen MGi, insbesondere zumindest eine Temperatur an einer Messstelle MSi am Prüfling 2, verarbeitet, mit dem Ziel, einen bestimmten Wärmestrom Q einzuprägen. Wenn für die Regelung eines Wärmestromaktuators 15ⱼ auch eine Messeinheit MEi zum Erfassen einer Istgröße benötigt wird, dann ist eine entsprechende Messeinheit MEi vorzusehen. Alternativ kann die benötigte Istgröße auch aus anderen Messgrößen MGi berechnet werden. Im Wärmestromregler 17 kann ein beliebiges geeignetes Regelgesetz implementiert sein, wobei es bei der Erfindung nicht auf die konkrete Umsetzung des Regelgesetzes ankommt.

Die Messeinheiten MEi liefern ihre Messgrößen MGi an die Wärmestromregler 17, die die entsprechende Messgröße MGi verarbeiten, und gegebenenfalls auch an die Prüfstandautomatisierungseinheit 3 oder an eine Simulationseinheit 20.

Die Wirkung der Wärmestromaktuatoren 15ⱼ auf die einzelnen zu konditionierenden Prüflingskomponenten PKi ist üblicherweise verkoppelt. Dies bedeutet, dass Wärmestromaktuatoren 15ⱼ gleichzeitig auf mehrere Prüflingskomponenten PKi wirken, bzw. umgekehrt, dass eine Prüflingskomponente PKi gleichzeitig von mehreren Wärmestromaktuatoren 15ⱼ beeinflusst wird. Für die Regelung der Wärmestromaktuatoren 15ⱼ ist es daher vorteilhaft, die Regelungen der einzelnen Wärmestromaktuatoren 15ⱼ regelungstechnisch zu entkoppeln. Hierfür gibt es in der Literatur hinreichend bekannte Methoden (beispielsweise J. K. Hedrick, A. Girard, "Control of Nonlinear Dynamic Systems: Theory and Applications", 2005, insbesondere Kapitel 8 und S. Skogestad, I. Postlethwaite "Multivariable Feedback Control - Analysis and Design, 2nd Edition, 2001 insbesondere die Kapitel 9, 10 und 3.4.1), weshalb hier nicht näher darauf eingegangen wird.

Sofern es keine Querkopplung zwischen verschiedenen Prüflingskomonenten PKi und jeweils zugeordneten Wärmestromaktuatoren 15ⱼ gibt, kann auch ohne regelungstechnischer Entkopplung eine dezentrale Regelung mit eigenständigen Reglern Wärmestromreglern 17 erfolgen.

Die Wärmestromaktuatoren 15ⱼ erzeugen am Prüfling 2 gemeinsam ein zeitlich und räumlich veränderliches Wärmestromfeld **Q̇**_{f} , bzw. analog ein Wärmestromdichtefeld **q̇**_{f}, das auf die Prüflingskomponenten PKi wirkt. Wenn die Wärmestromaktuatoren 15ⱼ entkoppelt sind, dann ergibt sich das Wärmestromfeld **Q̇**_{f} =[Q̇₁,...,Q̇ⱼ], bzw. analog das Wärmestromdichtefeld **q̇**_{f} = [q̇_{1,}...,q̇ⱼ], auf eine zu konditionierende Prüflingskomponente PKi.

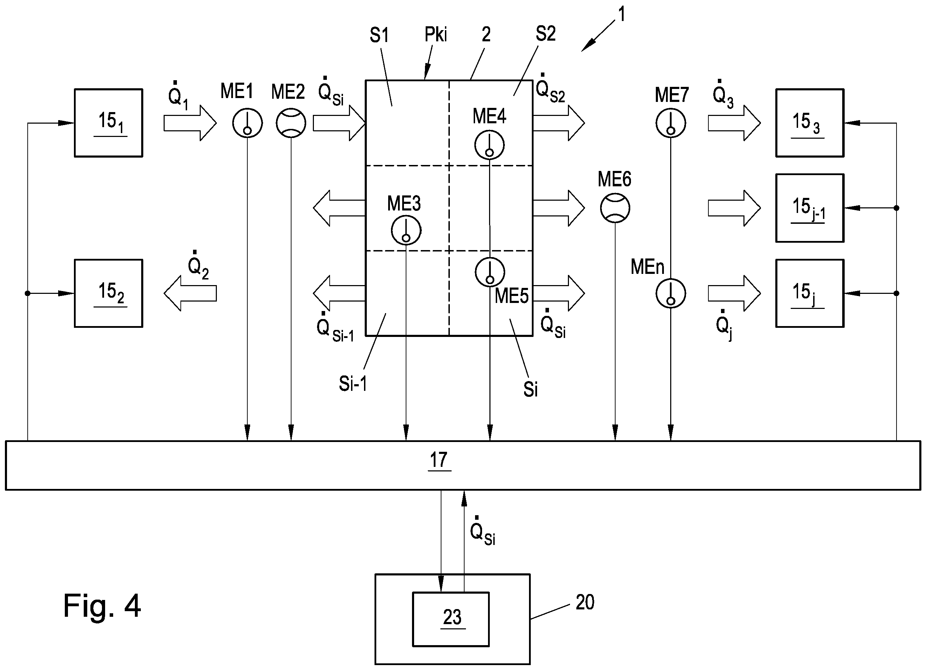

Eine Prüflingskomponente PKi wird nun vorteilhafterweise in i = 1, ...,s finite Segmente Si aufgeteilt. Diese Aufteilung in Segmente Si kann mit einer bedarfsgerechten oder anwendungsgerechten Granularität erfolgen. Ein Segment Si kann eine ganze Prüflingskomponente PKi sein, beispielsweise der Abgasstrang 11 oder eine Abgasnachbehandlungseinheit 12, 13 des Abgasstranges 11. Die Segmente Si können aber genauso feiner aufgeteilt werden, beispielsweise kann eine Prüflingskomponente PKi in mehrere Segmente Si aufgeteilt werden, beispielsweise kann der Abgasstrang 11 in zehn Segmente Si aufgeteilt werden. Grundsätzlich kann aber auch ein ganzer Prüfling 2, wie beispielsweise eine Batterie, ein Segment Si sein. Die genaue Aufteilung der Segmente Si ist für die Erfindung aber nebensächlich. Wichtig ist aber anzumerken, dass darüber hinaus die Anzahl j = 1,...,k der Wärmestromaktuatoren 15ⱼ nicht mit der Anzahl i = 1,...,s der Segmente Si übereinstimmen muss, und in der Regel nicht übereinstimmen wird. Durch das von den Wärmestromaktuatoren 15ⱼ erzeugte Wärmestromfeld **Q̇**_{f} ergeben sich dementsprechend an den Segmenten Sᵢ Segment-Wärmeströme Q̇_{Si}, also ein Wärmefluss von der Prüflingsumgebung in das jeweilige Segment Si hinein oder vom jeweiligen Segment Si in die Prüflingsumgebung. Das ist schematisch in der Fig.4 dargestellt, wobei bei diesem Ausführungsbeispiel eine Prüflingskomponente PKi auf sechs Segmente Si aufgeteilt wurde.

Die Wärmestromaktuatoren 15ⱼ erzeugen die Wärmeströme Q̇ⱼ, entweder zur Prüflingskomponente PKi hin und/oder von dieser weg. Wie bereits beschrieben sind am Prüfling 2 und gegebenenfalls auch in der Umgebung des Prüflings 2 an vorgesehenen Messstellen MSi Messeinheiten MEi vorgesehen, wobei zumindest eine Temperatur am Prüfling 2 gemessen wird. Mit den Messeinheiten MEi können Messgrößen MGi des Prüflings 2 bzw. einer Prüflingskomponenten PKi, aber auch Messgrößen MGi der Prüflingsumgebung des Prüflings 2, wie z.B. der Luftdruck oder die Luftfeuchtigkeit im Prüfraum, oder Messgrößen MGi eines Wärmestromaktuators 15ⱼ, wie beispielsweise eine Anströmgeschwindigkeit, erfasst werden. Die mit den Messeinheiten MEi erfassten Messgrößen MGi werden dem Wärmestromregler 17 zugeführt, der nun gemäß dem implementierten Regelgesetz die Stellgrößen für die Wärmestromaktuatoren 15ⱼ berechnet, um die gewünschten Segment-Wärmeströme Q̇_{Si} (Sollwertvorgabe) einzustellen. Damit kann an den Segmenten Sᵢ gezielt ein Segment-Wärmestrom Q̇_{Si} eingeregelt werden, der den Vorgaben, z.B. realen Gegebenheiten bei einer realen Erprobungsfahrt eines realen Fahrzeugs, möglichst entspricht. Die Wärmestromaktuatoren 15ⱼ werden dabei am Prüfstand 1 natürlich vorzugsweise so angeordnet, dass die Segment-Wärmeströme Q̇_{Si} günstig eingeregelt werden können.

Somit ist ein flexibles, offenes und erweiterbares verallgemeinertes IO-System (Sensorik und Aktuatorik inkl. Regelung) beschrieben, um realen Prüflingen 2 am Prüfstand 1 zeitlich- und räumlich veränderliche Wärmestromfelder **Q̇**_{f} mit einer dem entsprechenden Prüflauf und der jeweiligen Testaufgabe angepassten hinreichenden Güte und Dynamik aufzuprägen.

Für die Sollwertvorgabe dieser Wärmestromfelder **Q̇**_{f} zur Erzeugung der Segment-Wärmeströme Q̇_{Si} ist erfindungsgemäß eine Simulationseinheit 20 (in Form von geeigneter Simulationshardware und/oder Simulationssoftware) vorgesehen. Diese Simulationseinheit 20 erzeugt aufgrund zumindest eines geeigneten "echtzeitfähigen" Simulationsmodells 22 die Sollwerte in Form der Segment-Wärmeströme Q̇_{Si}, die durch das zeitlich und räumlich veränderliche Wärmestromfeld **Q̇**_{f} eingestellt werden.

Dies erlaubt dann zum Beispiel eine virtuelle Erprobungsfahrt (Prüflauf), in der der reale Prüfling 2 eingebettet in die virtuelle Welt eines Gesamtfahrzeuges und seiner Umgebung simuliert wird (X-In-The-Loop Simulation). Durch das Simulationsmodell 22 wird also beispielsweise ein virtuelles Fahrzeug durch eine virtuelle Welt bewegt. Die Simulationseinheit 20 kann auch in der Prüfstandautomatisierungseinheit 3 implementiert sein. Die Simulation erfolgt für die virtuelle Erprobungsfahrt am Prüfstand 1 vorzugsweise in Echtzeit. D.h., dass für jeden Zeitschritt, beispielsweise im Millisekunden- bis Minutenbereich, eine aktuelle Sollwertvorgabe berechnet wird, um die erforderlichen Wärmestromfelder **Q̇**_{f} mit Hilfe der Wärmestromaktuator 15ⱼ einzuprägen.

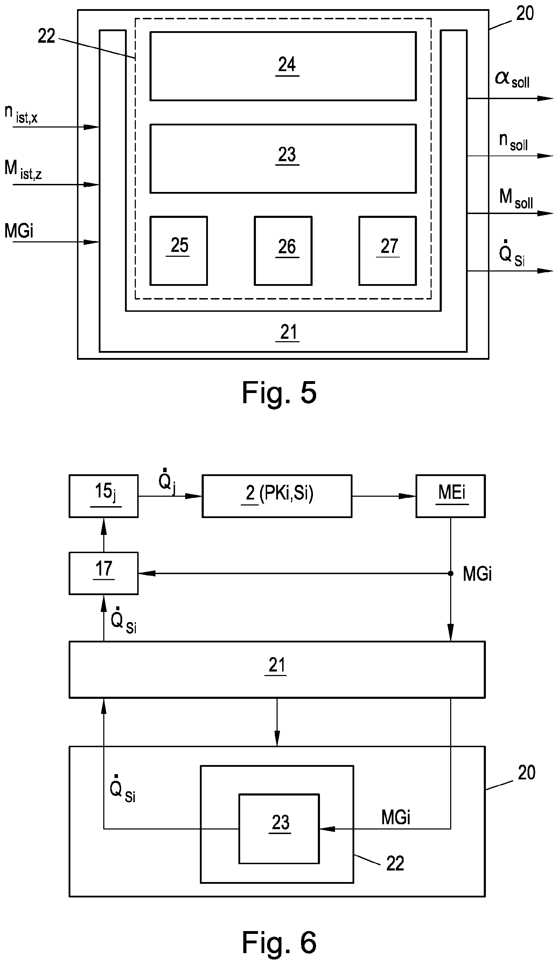

Das Simulationsmodell 22 umfasst zumindest ein thermisches Simulationsmodell 23, wie in Fig.4 und 5 dargestellt, das simuliert, wie der Prüfling 2 bzw. die Prüflingskomponente PKi mit der Umgebung thermisch interagiert, wenn der Prüfling 2 oder die Prüflingskomponente PKi in einem realen Fahrzeug eingebettet wäre und das Fahrzeug entlang einer vorgegebenen Fahrtstrecke bewegt werden würde. Diese Umgebung einer Prüflingskomponente PKi sind hierbei nicht real am Prüfstand vorhandene Fahrzeugkomponenten (z.B. benachbarten Baugruppen oder Bauteile des Fahrzeugs) und die Umwelt des Fahrzeugs (z.B. Luftströmung, Straßenoberfläche, ...). Das thermische Simulationsmodell 23 bildet damit insbesondere das thermische Verhalten von nicht am Prüfstand 1 real vorhanden Fahrzeugkomponenten (ggf. auch am Prüfstand verbaute Komponenten) und der Umwelt (Luftströmung, Straßenoberfläche ab, z.B. in Form von Motorraum- und Unterbodenmodellen ("underhood and underbody models"). Diese thermische Interaktion manifestiert sich in Wärmeströmen, die am Prüfstand 1 mit Hilfe der Wärmestromaktuatoren 15ⱼ nachgebildet werden.

Zusätzlich im Simulationsmodell 22 auch ein Fahrzeugmodell 24, ein Fahrermodell 25, ein Straßen- oder Streckenmodell 26, ein Radmodell 27, usw. implementiert sein, wie in Fig.5 beispielhaft dargestellt. Weiters kann auch ein Umgebungsmodell vorgesehen sein, das die Umgebung des Fahrzeugs simuliert. Die verschiedenen Teilmodelle des Simulationsmodell 22 arbeiten dabei zusammen, um den Prüflauf unter Berücksichtigung der thermischen Interaktion des Prüflings 2 mit der Umgebung des Fahrzeugs umzusetzen. Mit dem Simulationsmodell 22 können auch andere Einflüsse, wie verschiedene Fahrer (konservativ, aggressiv, usw.), Straßenzustände (z.B. Aquaplaning, Eis, verschiedene Straßenbeläge, usw.) oder verschiedene Reifen, abgebildet werden. Damit ist es auch möglich, dass sich das einzuregelnde Wärmestromfeld **Q̇**_{f} aus einer simulierten Fahrsituation unter Berücksichtigung bestimmter Umgebungsbedingungen ergibt. Als Beispiel kann man sich vorstellen, dass ein sportlicher Fahrer eine Kurve schneidet und damit über eine Eisplatte fährt oder durch eine Pfütze (z.B. Spritzwasser) fährt, wohingegen ein konservativer Fahrer die Kurve ausfährt und damit die Eisplatte oder die Pfütze umfährt. Das hat unmittelbaren Einfluss auf die Wärmeübertragungsvorgänge am Prüfling 2. Es ist sogar möglich, am Prüfstand 1 reale Steuerelemente eines Fahrzeugs, wie beispielsweise ein Lenkrad, ein Gaspedal, ein Bremspedal, eine Gangschaltung, vorzusehen, über die aktiv in den Prüflauf eingegriffen werden kann. Die Simulation erfolgt dabei vorzugsweise in Echtzeit in der erforderlichen zeitlichen Auflösung.

Anstelle der diversen Teilmodelle (Fahrzeugmodell 24, ein Fahrermodell 25, ein Straßen- oder Streckenmodell 26, ein Radmodell 27, Motorraum- und Unterbodenmodelle als Teil des Thermischen Simulationsmodells 23, usw.) kann der Prüflauf aber auch in anderer Weise vorgegeben sein, beispielsweise in Form einer herkömmlichen zeitbasierten oder wegbasierten Geschwindigkeitsvorgabe. Durch die Teilmodelle oder die zeit- oder wegbasierte Geschwindigkeitsvorgabe wird der konkrete Prüflauf festgelegt, wobei die dabei passierende thermische Interaktion des Prüflings 2 mit der Umgebung jeweils durch das thermische Simulationsmodell 23 simuliert wird.

Die Simulationseinheit 20 weist weiters eine Schnittstelle 21 auf (Fig.5), über die dem Simulationsmodell 22 benötigte Messgrößen MGi, aber auch Istgrößen des Prüflings 2, wie eine oder mehrere Istdrehzahlen n_{ist,x}, oder der Belastungsmaschine 5, wie ein oder mehrere Istdrehmomente M_{ist,z}, zugeführt werden können und über die durch das Simulationsmodell 22 berechnete Sollwerte zur Regelung des Prüflings 2 (z.B. Drosselklappenstellung αₛₒₗₗ) und/oder des Prüfstandes 1 (z.B. ein Solldrehmoment Mₛₒₗₗ und/oder eine Solldrehzahl nₛₒₗₗ der Belastungsmaschine 5 bzw. mehre Solldrehmomente und/oder Solldrehzahlen bei mehreren Belastungsmaschinen), bzw. des Prüflaufs, insbesondere der Wärmestromaktuatoren 15ⱼ, ausgegeben werden. Die Schnittstelle 21 stellt gegebenenfalls auch notwendige Signalaufbereitungsmechanismen bereit, z.B. Filter für die Messgrößen MGi. Durch die Bereitstellung der Messgrößen MGi für die Simulationseinheit 20 wird die "Simulationsschleife" geschlossen und der Prüfling 2 tatsächlich "in-the-Loop" einer virtuellen-realen Welt genommen.

Das thermische Simulationsmodell 23, das die thermische Interaktion einer Prüflingskomponente PKi mit der Umgebung nachgebildet, kann beliebig aufgebaut sein, beispielsweise in Form eines physikalischen Modells, eines empirischen Modells oder eines trainierten Modells (neuronales Netzwerk, lineares Modellnetzwerk, usw.). Des Weiteren kann das thermische Simulationsmodell 23 das Verhalten einer zu untersuchenden und real am Prüfstand 1 vorhanden Prüflingskomponente PKi nachbilden, um beispielweise nicht gemessene oder messbare Größen (z.B. Temperaturen) zu rekonstruieren (z.B. mittels eines regelungstechnischen Beobachters). Das thermische Simulationsmodell 23 ermittelt in jedem vorgegebenen Zeitschritt Sollwerte für die Segment-Wärmeströme Q̇_{Si} für zumindest ein Segment Si, vorzugsweise für jedes Segment Si, des Prüflings 2. Dazu verarbeitet das thermische Simulationsmodell 23 zumindest eine mit einer Messeinheit MEi an der zughörigen Messstelle MSi gemessene Temperatur (oder eine dazu äquivalenten physikalische Größe). Selbstverständlich kann das thermische Simulationsmodell 23 auch noch weitere Messgrößen MGi, wie z.B. Massen- oder Volumenströme, Luftdruck, Umgebungstemperatur, etc., verarbeiten. Welche Messgrößen MGi benötigt werden hängt von der jeweiligen Implementierung des thermischen Simulationsmodells 23 ab und gegebenenfalls von der jeweiligen Implementierung der anderen Modelle des Simulationsmodells 22. Hierbei ist es auch möglich für das thermische Simulationsmodell 23 benötigte Messgrößen MGi nicht direkt zu messen, sondern auf Basis anderer, gemessener Messgrößen MGi zu schätzen, beispielsweise mittels eines geeigneten Beobachters, oder zu berechnen. Im Beispiel eines Abgasstranges 11 ist es z.B. möglich aus einer Messung einer Eintritts- und Austrittstemperatur des Abgases in bzw. aus dem Abgasstrang 11 und einer Messung des Abgasmassenstromes durch den Abgasstrang 11 die Oberflächentemperatur an verschiedenen Stellen des Abgasstranges 11 zu berechnen.

Das thermische Simulationsmodell 23 kann weiter auch Größen des Prüflaufs selbst, beispielsweise erhalten von anderen Modellen des Simulationsmodell 22 oder von der Geschwindigkeitsvorgabe, verarbeiten, z.B. eine Fahrzeuggeschwindigkeit. Vorzugsweise werden durch den Prüflauf auch Umgebungsbedingungen, wie Lufttemperatur, Luftfeuchtigkeit, usw. vorgegebenen, die auch in das thermische Simulationsmodell 23 einfließen können. Es können aber auch Ereignisse vorgegeben werden, wie z.B. ein Gewitter, Haltephasen des Fahrzeugs oder die Durchfahrt durch eine Pfütze, die ebenfalls in das thermische Simulationsmodell 23 einfließen können.

Über die Schnittstelle 21 werden die, z.B. numerisch oder modellbasiert, ermittelten Sollwerte der Segment-Wärmeströme Q̇_{Si} an einen Wärmestromregler 17 übergeben, der diese Sollwerte in jedem vorgegebenen Zeitschritt der Regelung mittels einer Anzahl von Wärmestromaktuatoren 15ⱼ, wobei zumindest ein Wärmestromaktuator 15ⱼ vorgesehen ist, an dem zumindest einem Segment Si, vorzugsweise an allen Segmenten Si, mit einer gewissen Güte einregelt. Die Güte ist dabei unter anderem von der konkreten Implementierung der Wärmestromaktuatoren 15ⱼ abhängig. Dazu werden aus den Sollwerten der Segment-Wärmeströme Q̇_{Si} in einen Wärmestromregler 17 gemäß dem implementierten Regelgesetz Stellgrößen für die vorhandenen j Wärmestromaktuatoren 15ⱼ berechnet und den Wärmestromaktuatoren 15ᵢ vorgegeben, die entsprechende Wärmeströme Q̇ⱼ, bzw. das Wärmestromfeld **Q̇**_{f}, erzeugen.

Zur Veranschaulichung der erfindungsgemäßen Vorgangsweise dient folgendes Beispiel: Der Prüfling 2 wird im Rahmen einer realen Erprobungsfahrt eingebettet in ein reales Fahrzeug auf einem realen Prüfgelände bewegt. Dann würden sich für die am Prüfling 2 festgelegten Segmente Si gewisse reale Segment-Wärmeströme Q̇_{Si} ergeben. Die Aufgabe besteht nun darin, diese realen Segment-Wärmeströme Q̇_{Si}, die in der realen Erprobungsfahrt auftreten, in einer virtuellen Erprobungsfahrt auf dem Prüfstand 1, also in einem Prüflauf, als Sollwerte aus einem geeigneten thermischen Simulationsmodell 23 zu generieren. Gemäß den Gesetzen der Physik hängen diese Segment-Wärmeströme Q̇_{Si} von den sich am Prüfling 2 ergebenden Temperaturfeldern, die über die Messstellen MSi näherungsweise erfasst werden, entscheidend ab, beispielsweise über Wärmeleitung, Konvektion, Wärmestrahlung. Dazu werden in jedem Zeitschritt die Temperaturen des Prüflings 2 an n Messstellen MSi gemessen und daraus aufgrund des thermischen Simulationsmodells 23 für die i Segmente Si die Segment-Wärmeströme Q̇_{Si} berechnet und mit einem Wärmestromregler 17 und den Wärmestromaktuatoren 15j am Prüfstand 1 eingeregelt.

Es ist auch allgemein anzumerken, dass es dabei keine 1:1-Korrespondenz zwischen Messstellen MSi und Segmenten Si geben muss. An einzelnen Segmenten Si kann man z.B. mehrfach die Temperatur messen, an anderen Segmenten Si hingegen muss gar keine Temperaturmessung stattfinden. Dort wird das Temperaturfeld dann eben nur geschätzt.

Der Informationsfluss zur Regelung der Segment-Wärmeströme Q̇_{Si} ist nochmals verallgemeinert in Fig.6 dargestellt. Am Prüfling 2 und gegebenenfalls am Prüfstand 1 werden mittels Messeinheiten MEi eine Anzahl von Messgrößen MGi an bestimmten Messstellen MSi erfasst. Dabei wird an zumindest einer Messstelle MSi am Prüfling 2 zumindest eine Temperatur (oder eine äquivalente physikalische Größe) gemessen. Daneben können noch andere Messgrößen MGi, wie beispielsweise Größen der Umgebung (Umgebungstemperatur, Luftfeuchtigkeit, Luftdruck, usw.) und auch Massen- oder Volumenströme gemessen werden, wie oben erläutert. Die Messgrößen MGi werden über die Schnittstelle 21 dem thermischen Simulationsmodell 23 des Simulationsmodells 22 in der Simulationseinheit 20, und gegebenenfalls auch weiteren Modellen des Simulationsmodells 22, zugeführt. Das thermische Simulationsmodell 23 ermittelt aus den Messgrößen MGi die Sollwerte der Segment-Wärmeströme Q̇ₛᵢ an den Segmenten Si. Diese Sollwerte der Segment-Wärmeströme Q̇_{Si} werden einem Wärmestromregler 17 zum Einregeln über die Wärmestromaktuatoren 15ⱼ übergeben. Die Wärmestromaktuatoren 15ⱼ erzeugen dazu die benötigten Wärmeströme Q̇ⱼ, die auf die zu konditionierenden Prüflingskomponenten PKi, bzw. auf die Segmente Si, wirken.

Falls sich die Segment-Wärmeströme Q̇_{Si} in aufeinander folgenden Zeitschritten sehr rasch ändern, beispielsweise bei einer Durchfahrt durch eine Pfütze, wobei z.B. kurzfristig viel Pfützenwasser am heißen Auspufftopf des Abgasstranges 11 verdampft, kann es sein, dass der Wärmestromaktuator 15ⱼ aufgrund der stets begrenzten Dynamik nicht in der Lage ist, solche raschen Änderungen der Segment-Wärmeströme Q̇_{Si} einzuregeln. In diesem Fall kann vorgesehen werden, dass zumindest die Segment-Wärmeströme Q̇_{Si} im integralen Mittel über ein geeignet gewähltes Zeitfenster, z.B. 1min, eingeregelt werden, dass also die Integral ausgetauschte Wärme über einen längere Zeitspanne dem Prüflauf entspricht.

Um den Belastungszustand des Prüflings 2 am Prüfstand 1 über die Belastungsmaschine 5 gemäß dem Prüflauf einzuregeln, kann die Simulationseinheit 20 auch Information mit der Prüfstandautomatisierungseinheit 3 und/oder dem Aktuatorregler 4 austauschen.

Obwohl die Erfindung am Beispiel eines Abgasstranges 11 erläutert wurde, ist es offensichtlich, dass auch andere, unterschiedlichste Prüflingskomponenten PKi eines Fahrzeugs herangezogen werden können. Besonders interessant ist beispielsweise die Verwendung eines Verbrennungsmotor, eines Kühler oder eines Powerpacks eines Hybridfahrzeugs als Prüflingskomponente PKi, an denen jeweils auch mehrere Segmente Si vorgesehen sein könnten. Es wird mit der Erfindung somit ein X-In-The-Loop Prüfstand 1 realisiert, bei dem gewissen Fahrzeugkomponenten (das "X") physisch, real als Hardware am Prüfstand 1 aufgebaut sind (Prüfling 2) und als Prüflauf eine Erprobungsfahrt mit dem Fahrzeug, in dem der Prüfling 2 eingebettet ist, in der Simulationseinheit 20 simuliert wird. Als Fahrzeugkomponente kann hierbei auch das ganze Fahrzeug angesehen werden. In der Simulation wird die thermische Interaktion des Prüflings 2 mit der Umgebung in Form von Wärmeübertragungsvorgängen, die der Prüfling 2 in einem realen Fahrzeug während einer realen Testfahrt erfahren würde, simuliert. Es können aber auch beliebige andere, insbesondere auch fiktive, Wärmeübertragungsvorgänge vorgegeben und im Zuge eines Prüflaufs verwendet werden. Die sich aus dieser Simulation ergebenden Wärmeübertragungsvorgänge werden am Prüfstand 1 mit Wärmestromaktuatoren 15ⱼ eingeregelt. Auf diese Weise gelingen sehr realitätsnahe Prüfläufe am Prüfstand 1.

## Patentansprüche

1. Verfahren zur Durchführung eines Prüflaufs auf einem Prüfstand (1), wobei ein Prüfling (2) in Form eines Fahrzeugs oder einer Komponente des Fahrzeugs real am Prüfstand (1) aufgebaut und betrieben wird und eine Simulationseinheit (20) mit einem Simulationsmodell (22) den Prüflauf simuliert, wobei während des Prüflaufs am Prüfstand (1) an einer Messstelle (MSi) am Prüfling (2) zumindest eine Temperatur als Messgröße (MGi) gemessen wird, und zumindest eine Prüflingskomponente (PKi) des Prüflings (2) in eine Anzahl von Segmente (Si) unterteilt wird, **dadurch gekennzeichnet, dass** während des Prüflaufs die thermische Interaktion zumindest eines Segmentes (Si) mit der Umgebung des Fahrzeugs durch ein thermisches Simulationsmodell (23) des Simulationsmodells (22) nachgebildet wird, indem das thermische Simulationsmodell (23) den dem zumindest einem Segment (Si) zu- oder abgeführten Segment-Wärmestrom (Q̇_{Si}) berechnet **und dass** dieser Segment-Wärmestrom (Q̇_{Si}) am Prüfstand (1) an dem zumindest einen Segment (Si) mittels einer Anzahl von Wärmestromaktuatoren (15ⱼ), die dem Prüfling (2) einen Wärmestrom (Q̇ⱼ) einprägen, in Abhängigkeit von der gemessen Temperatur eingeregelt wird.

2. Verfahren nach Anspruch 1, **dadurch gekennzeichnet, dass** das Simulationsmodell (22) zusätzlich eines oder mehrere der folgenden Modelle aufweist: Fahrzeugmodell (24), Fahrermodell (25), Straßen- oder Streckenmodell (26), Radmodell (27), Umgebungsmodell.

3. Verfahren nach Anspruch 1 oder 2, **dadurch gekennzeichnet, dass** zusätzlich zumindest eine weitere Messgröße (MGi) des Prüflings (2) erfasst wird und im Simulationsmodell (22) verarbeitet wird.

4. Verfahren nach einem der Ansprüche 1 bis 3, **dadurch gekennzeichnet, dass** zusätzlich zumindest eine weitere Messgröße (MGi) der Prüflingsumgebung des Prüflings (2) erfasst wird und im Simulationsmodell (22) verarbeitet wird.

5. Prüfstand zur Durchführung eines Prüflaufs, wobei ein Prüfling (2) in Form eines Fahrzeugs oder einer Komponente des Fahrzeugs real am Prüfstand (1) aufgebaut ist und eine Simulationseinheit (20) mit einem Simulationsmodell (22) den Prüflauf simuliert, wobei am Prüfstand (1) zumindest eine Messeinheit (MEi) am Prüfling (2) vorgesehen ist, die als Messgröße (MGi) während des Prüflaufs am Prüfstand (1) eine Temperatur erfasst, und am Prüfstand (1) zumindest ein Wärmestromaktuator (15ⱼ) vorgesehen ist, der dem Prüfling (2) einen Wärmestrom (Q̇ⱼ) einprägt, **dadurch gekennzeichnet, dass** in der Simulationseinheit (20) ein thermisches Simulationsmodell (23) implementiert ist, das während des Prüflaufs die thermische Interaktion zumindest eines Segmentes (Si) einer Prüflingskomponente (PKi) des Prüflings (2) mit der Umgebung des Fahrzeugs nachbildet, indem das thermische Simulationsmodell (23) den dem zumindest einem Segment (Si) zu- oder abgeführten Segment-Wärmestrom (Q̇_{Si}) berechnet **und dass** ein Wärmestromregler (17) vorgesehen ist, der den Wärmestrom (Q̇ⱼ) des zumindest einen Wärmestromaktuators (15ⱼ) regelt, um damit den Segment-Wärmestrom (Q̇_{Si}) an dem zumindest einen Segment (Si) in Abhängigkeit von der gemessen Temperatur einzuregeln.

6. Prüfstand nach Anspruch 5, **dadurch gekennzeichnet, dass** im Simulationsmodell (22) zusätzlich eines oder mehrere der folgenden Modelle implementiert ist: Fahrzeugmodell (24), Fahrermodell (25), Straßen- oder Streckenmodell (26), Radmodell (27), Umgebungsmodell

7. Prüfstand nach Anspruch 5 oder 6, **dadurch gekennzeichnet, dass** am Prüfstand (1) zumindest eine weitere Messeinheit (MEi) vorgesehen ist, die eine weitere Messgrößen (MGi) des Prüflings (2) erfasst, die das Simulationsmodell (22) verarbeitet.

8. Prüfstand nach einem der Ansprüche 5 bis 7, **dadurch gekennzeichnet, dass** am Prüfstand (1) zumindest eine weitere Messeinheit (MEi) vorgesehen ist, die eine weitere Messgröße (MGi) der Prüflingsumgebung des Prüflings (2) erfasst, die das Simulationsmodell (22) verarbeitet.

## Claims

1. A method for carrying out a test run on a test bench (1), wherein a test object (2) in form of a vehicle or a component of the vehicle is physically set up and operated on the test bench (1), and a simulation unit (20) having a simulation model (22) simulates the test run, wherein at least one temperature is measured at a measurement point (MSi) on the test object (2) as a measured variable (MGi) during the test run on the test bench (1), and at least one test object component (PKi) of the test object (2) is subdivided into a number of segments (Si), **characterized in that** during the test run, the thermal interaction of at least one segment (Si) with the environment of the vehicle is simulated by means of a thermal simulation model (23) of the simulation model (22), **in that** the thermal simulation model (23) calculates the segment heat flow (Q̇_{Si}) that is supplied to or dissipated from the at least one segment (Si), **and that** said segment heat flow (Q̇_{Si}) is adjusted on the at least one segment (Si) as a function of the measured temperature by means of a number of heat flow actuators (15ⱼ) that subject the test object (2) to a heat flow (Q̇ⱼ).

2. The method according to claim 1, **characterized in that** the simulation model (22) additionally includes one or a plurality of the following models: vehicle model (24), driver model (25), road or route model (26), wheel model (27), environmental model.

3. The method according to claim 1 or 2, **characterized in that** additionally at least one further measurement variable (MGi) of the test object (2) is detected and processed in the simulation model (22).

4. The method according to one of claims 1 to 3, **characterized in that** additionally at least one further measurement variable (MGi) of the test object environment of the test object (2) is detected and processed in the simulation model (22).

5. A test bench for carrying out a test run, wherein a test object (2) in form of a vehicle or a component of a vehicle is physically set up on the test bench (1), and wherein a simulation unit (20) having a simulation model (22) simulates the test run, wherein on the test bench (1) at least one measurement unit (MEi) is provided on the test object (2) that detects a temperature as a measured variable (MGi) during the test run on the test bench (1), and at least one heat flow actuator (15ⱼ) is provided on the test bench (1) that subjects the test object (2) to heat flow (Q̇ⱼ), **characterized in that** a thermal simulation model (23) is implemented in the simulation unit (20) that simulates, during the test run, the thermal interaction of at least one segment (Si) of a test object component (PKi) of the test object (2) with the environment of the vehicle, **in that** the thermal simulation model (23) calculates the segment heat flow (Q̇_{Si}) that is supplied to or dissipated from the at least one segment (Si), **and that** a heat flow controller (17) is provided that controls the heat flow (Q̇ⱼ) of the at least one heat flow actuator (15ⱼ) to thereby adjust the segment heat flow (Q̇_{Si}) at the at least one segment (Si) as a function of the measured temperature.

6. The test bench according to claim 5, **characterized in that** one or a plurality of the following models are implemented in addition in the simulation model (22): vehicle model (24), driver model (25), road or route model (26), wheel model (27), environmental model.

7. The test bench according to claim 5 or 6, **characterized in that** at least one further measurement unit (MEi) is provided on the test bench (1) that detects a further measured variable (MGi) of the test object (2), which is processed by the simulation model (22).

8. The test bench according to one of claims 5 to 7, **characterized in that** at least one further measurement unit (MEi) is provided on the test bench (1) that detects a further measured variable (MGi) of the environment of the test object (2), which is processed by the simulation model (22).

## Revendications

1. Procédé d'exécution d'un essai sur un banc d'essai (1), dans lequel un échantillon (2) est conçu sous la forme d'un véhicule ou d'un composant du véhicule existant sur le banc d'essai (1) et exploité tel quel et une unité de simulation (20) ayant un modèle de simulation (22) simule l'essai, dans lequel, au cours de l'essai sur le banc d'essai (1), l'on mesure, au niveau d'un point de mesure (MSi) de l'échantillon (2), au moins une température en tant que grandeur de mesure (MGi), et dans lequel au moins un composant d'échantillon (PKi) de l'échantillon (2) est subdivisé en une pluralité de segments (Si), **caractérisé en ce que,** pendant l'essai, l'interaction thermique d'au moins un segment (Si) est simulée dans l'environnement du véhicule grâce à un modèle de simulation thermique (23) du modèle de simulation (22), le modèle de simulation thermique (23) calculant le flux de chaleur de segment (Q̇_{Si}) absorbé ou rejeté à partir de l'au moins un segment (Si), **et en ce que** ce flux de chaleur de segment (Q̇_{Si}) sur le banc d'essai (1) est régulé au niveau de l'au moins un segment (Si) au moyen d'une pluralité d'actionneurs de flux de chaleur (15ⱼ) qui enregistrent un flux de chaleur (Q̇ⱼ) généré ou absorbé par l'échantillon (2) en fonction de la température mesurée.

2. Procédé selon la revendication 1, **caractérisé en ce que** le modèle de simulation (22) comprend en outre au moins l'un des modèles suivants : modèle de véhicule (24), modèle de conducteur (25), modèle de route ou de trajectoire (26), modèle de roue (27), modèle d'environnement.

3. Procédé selon la revendication 1 ou 2, **caractérisé en ce qu'**au moins une autre grandeur de mesure (MGi) de l'échantillon (2) est en outre détectée et traitée dans le modèle de simulation (22).

4. Procédé selon l'une des revendications 1 à 3, **caractérisé en ce qu'**au moins une autre grandeur de mesure (MGi) de l'environnement d'échantillon de l'échantillon (2) est en outre détectée et traitée dans le modèle de simulation (22).

5. Banc d'essai permettant d'exécuter un essai, dans lequel un échantillon (2) est conçu sous la forme d'un véhicule ou d'un composant du véhicule existant sur le banc d'essai (1) et une unité de simulation (20) ayant un modèle de simulation (22) simule l'essai, dans lequel au moins une unité de mesure (MEi) sur l'échantillon (2) est prévue sur le banc d'essai (1), laquelle unité de mesure détecte une température en tant que grandeur de mesure (MGi) au cours de l'essai réalisé sur le banc d'essai (1), et au moins un actionneur de flux de chaleur (15ⱼ) étant prévu sur le banc d'essai (1), lequel actionneur enregistre un flux de chaleur (Q̇ⱼ) généré ou absorbé par l'échantillon (2), **caractérisé en ce qu'**un modèle de simulation thermique (23) est mis en oeuvre dans l'unité de simulation (20), lequel modèle de simulation simule, pendant l'essai, l'interaction thermique d'au moins un segment (Si) d'un composant d'échantillon (PKi) de l'échantillon (2) dans l'environnement du véhicule, le modèle de simulation thermique (23) calculant le flux de chaleur de segment (Q̇_{Si}) absorbé ou rejeté à partir de l'au moins un segment (Si), **et en ce qu'**un régulateur de flux de chaleur (17) est prévu, lequel régule le flux de chaleur (Q̇ⱼ) de l'au moins un actionneur de flux de chaleur (15ⱼ), pour ainsi réguler le flux de chaleur de segment (Q̇_{Si}) au niveau de l'au moins un segment (Si) en fonction de la température mesurée.

6. Banc d'essai selon la revendication 5, **caractérisé en ce que,** dans le modèle de simulation (22), au moins l'un des modèles suivants est en outre mis en oeuvre : modèle de véhicule (24), modèle de conducteur (25), modèle de route ou de trajectoire (26), modèle de roue (27), modèle d'environnement.

7. Banc d'essai selon la revendication 5 ou 6, **caractérisé en ce qu'**au moins une unité de mesure (MEi) supplémentaire est prévue sur le banc d'essai (1), laquelle unité de mesure détecte une autre grandeur de mesure (MGi) de l'échantillon (2), laquelle traite le modèle de simulation (22).

8. Banc d'essai selon l'une des revendications 5 à 7, **caractérisé en ce qu'**au moins une unité de mesure (MEi) supplémentaire est prévue sur le banc d'essai (1), laquelle unité de mesure détecte une autre grandeur de mesure (MGi) de l'environnement d'échantillon de l'échantillon (2), laquelle traite le modèle de simulation (22).
